# EUROPEAN PATENT SPECIFICATION

(11) **EP 3 230 127 B1**
(45) Date of publication and mention of the grant of the patent: **28.11.2018**
(21) Application number: 15867126.3
(22) Date of filing: 10.12.2015
(51) Int. Cl.: B60R 7/04

(54) **VEHICLE ARMREST ASSEMBLY**
ARMLEHNENANORDNUNG FÜR EINE FAHRZEUG
ENSEMBLE ACCOUDOIR DE VÉHICULE

(30) Priority: 10.12.2014 US 201462090289 P
(43) Date of publication of application: 18.10.2017
(73) Proprietor: Shanghai Yanfeng Jinqiao Automotive Trim Systems Co., Ltd., No. 2166 Jufeng Road Pudong New Area Shanghai (CN); Catlin, Michael R., Holland, Michigan 49423 (US); Newkirk, Tyler, James, Grand Rapids, MI 49505 (US); Flowerday, Craig David, Holland, Michigan 49424 (US); Mccarthy, David John, Holland, Michigan 49424 (US)
(72) Inventor: CATLIN, Michael, Robert, Holland, MI 49423 (US); NEWKIRK, Tyler, James, Grand Rapids, MI 49505 (US); FLOWERDAY, Craig, D., Holland, MI 49424 (US); MCCARTHY, David, John, Holland, MI 49424 (US)
(74) Representative: Trinks, Ole
(86) International application number: PCT/US2015/064926
(87) International publication number: WO 2016/094621

(56) References cited:
- DE-A1- 19 808 381
- DE-U1-202015 100 013
- US-A1- 2002 163 215
- US-A1- 2009 072 565
- US-A1- 2010 078 956
- US-A1- 2010 090 491

## Description

### FIELD

The present invention relates to a vehicle armrest assembly and also relates to vehicle interior components for vehicle armrest assemblies.

### BACKGROUND

DE19808381 discloses a component for a vehicle interior which reflects the preamble of claim 1.

Certain vehicles include storage volumes positioned throughout the vehicle interior. For example, an overhead console may include a storage volume suitable for storing sunglasses, driving glasses, or other items. Other storage volumes may be located within a center console, a seat, a door panel, or other areas of the vehicle interior. For example, a floor console that may include a cover, such as a tambour door, configured to secure the contents of a storage volume or compartment and/or to hide the contents from view. The cover may be configured to slide relative to the floor console to uncover the compartment. The cover may not enable access to certain storage volumes, such as those positioned beneath an armrest. The compartment also may not facilitate organization and storage of certain items, such as laptops, notebooks, or the like.

### SUMMARY

The present invention overcomes the above inconvenience with a component according to claim 1.

The present invention relates to a vehicle armrest system includes a support structure and an armrest assembly having a first armrest portion adjacent to an opening of the armrest assembly and pivotally coupled to the support structure.

The first armrest portion is configured to rotate between a closed position that substantially covers a first storage compartment within the support structure and an open position that facilitates access to an interior of the first storage compartment. The system also includes a tambour door positioned within the opening in the armrest assembly and slidable with respect to the first armrest portion between a closed position
that substantially covers a second storage compartment within the support structure and an open position that facilitates access to an interior of the second storage compartment.

The present invention also relates to a vehicle armrest system includes a support structure having a plurality of storage compartments and an armrest assembly having a first armrest portion and a second armrest portion disposed on laterally opposite sides of an opening of the armrest assembly. Each of the first armrest portion and the second armrest portion is independently pivotally coupled to the support structure. The system also includes a tambour door positioned within the opening in the armrest assembly and slidable with respect to the support structure between a closed position that substantially covers a first storage compartment of the plurality of storage compartments and an open position that facilitates access to an interior of the first storage compartment of the plurality of storage compartments.

The present invention further relates to a vehicle armrest system includes a support structure comprising a central storage compartment disposed between laterally outer storage compartments. The system also includes an armrest assembly coupled to the support structure, and the armrest assembly includes a first armrest portion configured to enable access to one of the laterally outer storage compartments and a second armrest portion configured to enable access to another one of the laterally outer storage compartments. The system further includes a tambour door positioned within an opening in the armrest assembly and configured to move relative to the support structure to enable access to the central storage compartment.

The present invention further relates to a component for a vehicle interior that includes a base, a divider of the base configured to form a main compartment and a side compartment in the base, a cover, and a door. The cover is configured to enclose the main compartment and the door is configured to enclose the side compartment.

The present invention further relates to a component for a vehicle interior that includes a base, a first divider of the base configured to form a main compartment and a first side compartment, a second divider of the base configured to form the main compartment and a second side compartment, a cover, a first door, and a second door. The cover is configured to enclose the main compartment, the first door is configured to enclose the first side compartment, and the second door is configured to enclose the second side compartment.

### DRAWINGS

FIG. 1A is a schematic perspective view of an exemplary embodiment of a vehicle that may incorporate an armrest assembly in accordance with an exemplary embodiment of the present invention.
FIG. 1B is a schematic view of an exemplary embodiment of a forward part of an interior of the vehicle of FIG. 1A.
FIG. 1C is a schematic perspective view of an exemplary embodiment of the interior of the vehicle of FIG. 1A.
FIG. 2 is a schematic perspective view of an exemplary embodiment of a floor console having an armrest assembly.
FIGS. 3A-3C are schematic perspective views of exemplary embodiments of the armrest assembly of FIG. 2 during use of the armrest assembly.
FIGS. 4A-4C are schematic perspective views of exemplary embodiments of the armrest assembly of FIG. 2 during use of the armrest assembly.
FIG. 5A is a schematic front cross-sectional view of an exemplary embodiment of the armrest assembly of FIG. 2 in which a laterally exterior edge of a door is pivotally coupled to a base.
FIG. 5B is a schematic front cross-sectional view of an exemplary embodiment of the armrest assembly of FIG. 2 in which a laterally exterior edge of a door is pivotally coupled to a base.
FIG. 6A is a schematic front cross-sectional view of a portion of an exemplary embodiment of an armrest assembly in which a door is pivotally coupled to a base via an offset pivot.
FIG. 6B is a schematic front cross-sectional view of a portion of an exemplary embodiment of an armrest assembly in which a door is pivotally coupled to a base via a multiple pivot assembly.

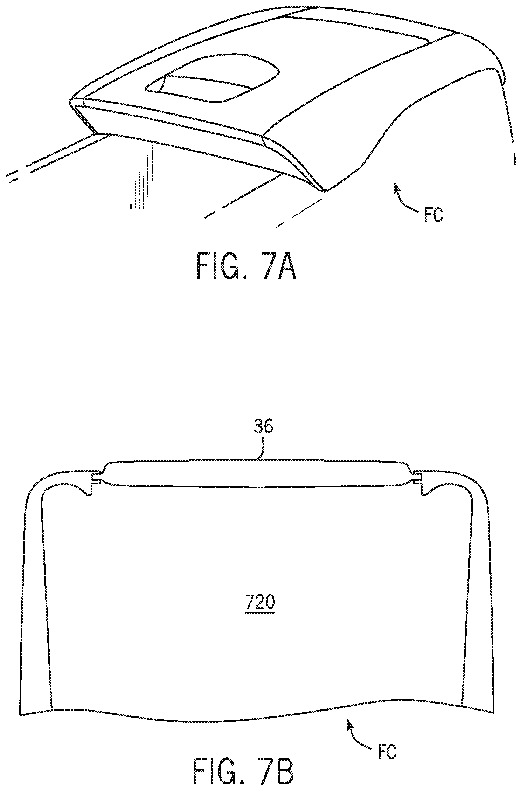

FIG. 7A is a schematic perspective view of a conventional armrest assembly.
FIG. 7B is a schematic front cross-sectional view of the conventional armrest assembly of FIG. 7A.

### DETAILED DESCRIPTION

Referring generally to the FIGURES, this application discloses various exemplary embodiments of armrest assemblies for use in vehicles.

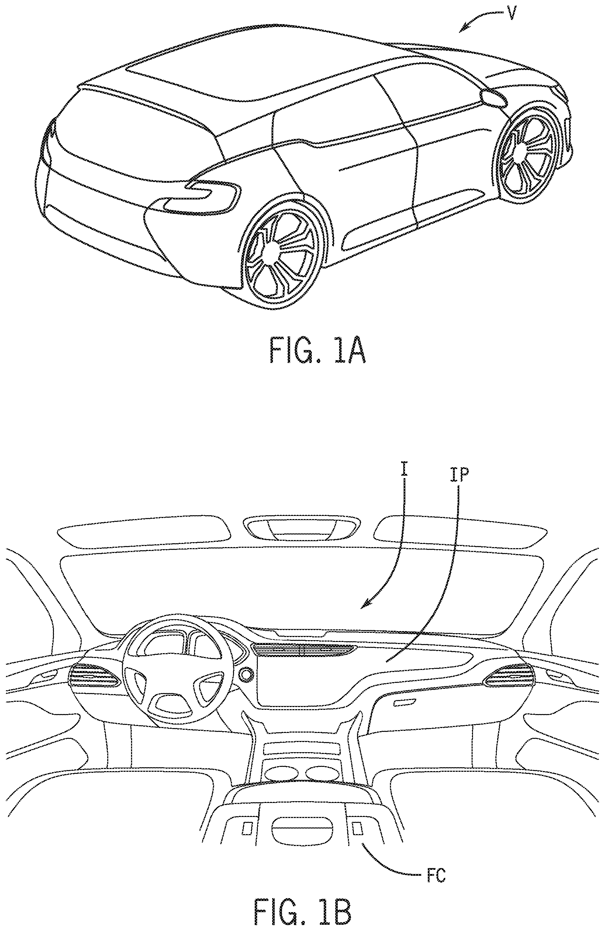

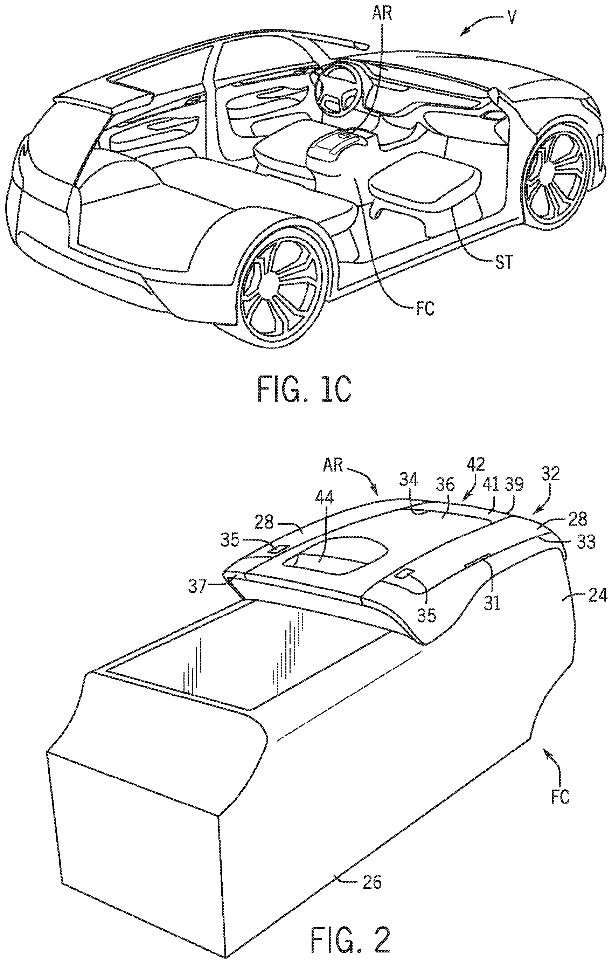

FIG. 1A is a schematic perspective view according to an exemplary embodiment of a vehicle V that may incorporate an armrest assembly. FIG. 1B is a schematic view according to an exemplary embodiment of a forward part of an interior volume I of the vehicle V. FIG. 1C is a schematic perspective view according to an exemplary embodiment of the interior volume I of the vehicle V. The vehicle V, in this case a car, has an interior volume I in which various components for a vehicle interior are situated, such as seats ST and a floor console FC. According to an exemplary embodiment, the floor console FC includes a base (e.g., a support structure) that supports an armrest assembly for the convenience of one or more vehicle occupants. The base may include one or more dividers configured to form one or more interior compartments. The armrest assembly enables access into the one or more interior compartments within the base by manipulation of one or more doors (e.g., armrest portions) and/or by manipulation of a cover (e.g., a door or a tambour door). For example, according to an exemplary embodiment, the one or more doors may be configured to enclose one or more side compartments and the cover may be configured to enclose a main compartment. According to an exemplary embodiment, each of the one or more doors independently moves (e.g., pivot) relative to the base between a closed position that substantially covers the corresponding side compartment and an open position that substantially uncovers the corresponding side compartment. According to an exemplary embodiment, the cover is disposed within an opening of the armrest assembly and is configured to slide along a wall of the base. The cover may be configured to slide between a closed position that substantially covers the main compartment (e.g., a central storage compartment) and an open position that substantially uncovers an interior of the main compartment. The movable doors and/or the cover selectively facilitate and block access to various corresponding compartments within the base. According to an exemplary embodiment, FIGS. 1B and 1C show the floor console FC is positioned between forward seats ST of the vehicle, although the armrest assembly, cover, and entire consoles may be positioned between rear seats ST, and/or in various positions within trucks, busses, aircraft, boats, and any other suitable vehicles.

FIG. 2 is a schematic perspective view according to an exemplary embodiment of a floor console FC having an armrest assembly AR. The armrest assembly AR is generally supported by the floor console FC. The floor console FC includes a base 24 on which the armrest assembly AR is disposed. The base 24 may be part of the floor console FC, or the base 24 may be part of a sub-assembly secured to the floor console FC during final assembly. A bottom portion 26 of the base 24 may include all or a portion of the floor console FC that is configured to be secured to the vehicle floorboard, or to a seat structure, or to any suitable secure point of the vehicle V. The base 24 may include one or more interior compartments (e.g., storage compartments or storage volumes) configured to retain various items, such as documents, glasses, and/or portable electronic devices, such as laptop computers and/or tablets, among other items.

According to exemplary embodiments, the armrest assembly AR includes a first door 28 (e.g., a first armrest portion) and a second door 28 (e.g., a second armrest portion). According to an exemplary embodiment, the first door 28 and the second door 28 are configured to independently move (e.g., pivot) from a closed position 32 to an open position. In the closed position 32, each of the first door 28 and the second door 28 substantially covers (e.g., conceals or blocks access to) one or more corresponding side compartments (e.g., laterally outer storage compartments) within the base 24. In the open position, each of the first door 28 and the second door 28 substantially uncovers (e.g., exposes or enables access to) an interior of the one or more corresponding side compartments within the base 24. For example, the vehicle occupant may open the first door 28 and/or the second door 28 to access items within the one or more corresponding side compartments, and then close the first door 28 and/or the second door 28 to block access to the one or more corresponding storage compartments.

According to an exemplary embodiment, the first and second doors 28 are pivotally coupled to the base 24 via respective hinges 31 and rotate between the closed position and the open position. The hinges 31 are disposed at respectively laterally outer edges 33 of the first and second doors 28. Thus, the vehicle occupant may independently open and close the first and second doors 28 by independently rotating the first and second doors 28 about the respective hinges 31. According to an exemplary embodiment, a mechanism 35 (e.g., a coupling structure or a latch), such as a paddle or push style latch, may be provided on the first and second doors 28 and/or on the base 24 to enable the vehicle occupant to release (e.g., unlatch or unlock) the first and second doors 28 from the base 24 and rotate the first and second doors 28 relative to the base 24. According to an exemplary embodiment, an over center latch may include a spring to bias the first or second doors 28 toward the closed position 32 when the first or second doors 28 are substantially closed. According to an exemplary embodiment, an inertia latch may couple the first or second doors 28 to the base 24 to lock the first or second doors 28 to the base 24 in response to certain changes in acceleration (e.g., during a vehicle crash). Although the mechanism 35 is shown on a visible surface of the first and second doors 28, the mechanism 35 may be provided in any suitable location and may have any suitable form according to exemplary embodiments.

According to an exemplary embodiment, FIG. 2 shows the first door 28 and the door 28 disposed on generally opposite lateral sides of an opening 34 of the armrest assembly AR. A cover 36 is positioned within the opening 34 of the armrest assembly AR. According to an exemplary embodiment, the cover 36 is a tambour door. According to an exemplary embodiment, the cover 36 is configured to slide relative to the base 24 in a first direction (e.g., a forward direction) opposite a second direction (e.g., a rearward direction) from an illustrated closed position 42 to an open position. The closed position 42 substantially covers (e.g., conceals or blocks access to) one or more corresponding main compartments within the base 24, while the open position substantially uncovers (e.g., facilitates access to) the one or more corresponding main compartments. For example, according to an exemplary embodiment, the vehicle occupant may slide the cover 36 in the rearward direction, substantially uncovering the one or more corresponding main compartments and allowing access to items within the one or more corresponding main compartments, and then slide the cover 36 in the forward direction to substantially cover the one or more corresponding main compartments and block access to the one or more corresponding main compartments. The first door 28, the second door 28, and the cover 36 selectively facilitate and block access to the one or more compartments. According to an exemplary embodiment, the cover 36 includes a mechanism 44 (e.g., a coupling structure or a latch) that is configured to be removably coupled to a corresponding latch of the base 24 or of the armrest assembly AR. The mechanism 44 may have any suitable form and may generally enable the vehicle occupant to release (e.g., unlock or unlatch) the cover 36 from the base 24 and to slide the cover 36 relative the base 24.

According to an exemplary embodiment, FIG. 2 shows the armrest assembly AR extending from a forward end 37 to a rear end 39. The first door 28 and the second door 28 extend on opposite lateral sides of the opening 34 and are generally parallel to one another. According to an exemplary embodiment, the first door 28 and the second door 28 extend partially between the forward end 37 and the rear end 39 of the armrest assembly AR. However, in some exemplary embodiments, the first door 28 and the second door 28 may each extend from the forward end 37 to the rear end 39 of the armrest assembly AR. According to an exemplary embodiment, the armrest assembly AR includes a cross-piece 41 (e.g., a rear cross-piece) positioned at the rear end 39 of the armrest assembly AR and extending cross-wise (e.g., laterally) between the first and the second doors 28. According to an exemplary embodiment, the cross-piece 41 may cover or conceal at least a portion of the cover 36 and related components that support the cover 36, for example.

According to an exemplary embodiment, one or more portions of the armrest assembly AR (e.g., the first door 28, the second door 28) are padded to provide added comfort for vehicle occupants. Various components of the armrest assembly AR may be made of an injection moldable plastic material that may be assembled in any suitable conventional manner, such as via fasteners, adhesives, welding, and so forth. The cover 36 may be formed from any suitable material, such as a padded material, a hard material, a flexible material, and so forth. The one or more portions of the armrest assembly AR (e.g., the first door 28, the second door 28) and/or the cover 36 may be wrapped in a material, such as leather, vinyl, fabric, or integral skin. According to an exemplary embodiment, the armrest assembly AR and/or the cover 36 includes foam to provide passenger comfort. According to an exemplary embodiment, various components of the armrest assembly AR are formed from one or more of a metal, a metal alloy, carbon fiber, and/or plastic. According to an exemplary embodiment, one or more portions of the armrest assembly AR (e.g., the first door 28, the second door 28) of the armrest assembly AR are padded and may be formed from a relatively soft material, while the cover 36 is formed from a relatively hard material. According to an exemplary embodiment, a visible top surface of the first and second doors 28 of the armrest assembly AR are generally flush with a visible top surface of the cover 36. According to an exemplary embodiment, the first and second doors 28 may have side walls that extend above the cover 36, and thus, the cover 36 may be recessed relative to the first and second doors 28 of the armrest assembly AR

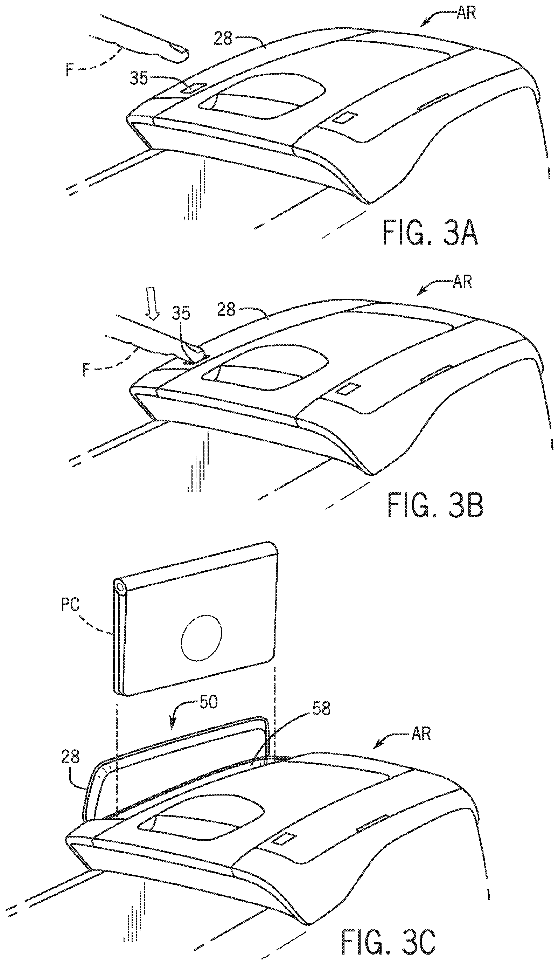

According to an exemplary embodiment, the open position may be achieved by moving (e.g., rotating or pivoting) the first door 28 relative to the base 24. According to an exemplary embodiment, the first door 28 and the second door 28 are independently pivotally coupled to the base 24 via respective hinges 31 disposed at respective laterally outer edges 33 of the first armrest portion 28 and the second armrest portion 28. FIGS. 3A-3B are perspective views according to an exemplary embodiment of the armrest assembly AR of FIG. 2 during a use that opens the first door 28. According to an exemplary embodiment, a vehicle occupant may depress the mechanism 35 with a finger F to rotate the first door 28 in a first direction about a first axis (e.g., a first longitudinal axis) and move the first door 28 from the closed position 32 to the open position 50 to expose a first side compartment 58 of the base 24. The first side compartment 58 may have any suitable geometry. According to an exemplary embodiment, the first side compartment 58 is a generally narrow compartment and may be configured to receive and store one or more substantially narrow items, such as documents, a laptop computer, a tablet, or the like. According to an exemplary embodiment, FIG. 3C shows the first side compartment 58 receiving a laptop PC for storage. Rotation of the first door 28 in a second direction about the first axis moves the first door 28 from the open position 50 to the closed position 32 to substantially cover the first side compartment 58 of the base 24. Rotation of the second door 28 in a first direction about a second axis (e.g., a second longitudinal axis), which is generally parallel to the first axis according to an exemplary embodiment, moves the second door 28 from the closed position 32 to the open position, and rotation of the second door 28 in a second direction about the second axis moves the second door 28 from the open position to the closed position 32.

While the hinges 31 may be located at respective laterally outer edges 33 of the first door 28 and the second door 30, the hinges 31 may be positioned at any suitable location according to exemplary embodiments. For example, the hinges 31 may be positioned at respective laterally inner edges (e.g., the hinge 31 extends along a longitudinal axis of the base 24). According to an exemplary embodiment, the hinges 31 may be positioned at respective rear edges (e.g., the hinge 31 extends along a lateral axis of the base 24) and each of the first and second armrest portions 28 may independently rotate about the respective hinges 31 at the rear edge to move the first and second doors 28 between the open position 50 and the closed position 32. The hinges 31 may include simple pivots, offset pivots, or multiple pivots. According to exemplary embodiments, one side compartment 58 may be provided under the first door 28 and/or under the second door 28 or multiple side compartments may be provided under each of the first door 28 and/or under the second door 28. According to an exemplary embodiment, the armrest assembly AR may include more than two movable doors 28 each configured to enable access to at least one side compartment 58. For example, rather than the first door 28 extending substantially between the forward end 37 and the rear end 39 of the armrest assembly AR, two separate and independently movable doors may be disposed on one lateral side of the armrest assembly AR between the forward end 37 and the rear end 39 of the armrest assembly AR. One such door may enable access to a first side compartment (e.g., a forward compartment), while another door may enable access to a second side compartment (e.g., a rearward compartment).

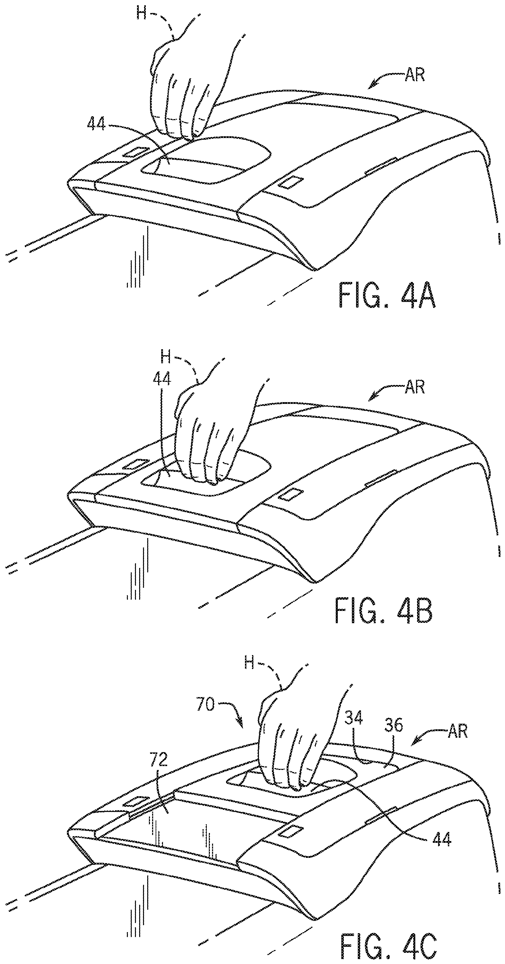

FIGS. 4A-4C are schematic perspective views according to exemplary embodiments of the armrest assembly AR of FIG. 2 during a use that opens the cover 36. The cover 36 may be moved from the closed position 42 to the open position 70 in which one or more corresponding main compartments 72 (e.g., central storage compartments) are exposed. According to an exemplary embodiment, the cover 36 may be independently moved by the vehicle occupant's hand by pulling the cover 36 in the rearward direction to expose the one or more corresponding main compartments 72 and by pulling in the forward direction to enclose the one or more corresponding main compartments 72. According to an exemplary embodiment, the cover 36 may be moved independently of the first and second doors 28 of the armrest assembly AR, and thus, the cover 36 may be moved while one or more of the first and second doors 28 of the armrest assembly AR are in the closed position 32 or the open position 50.

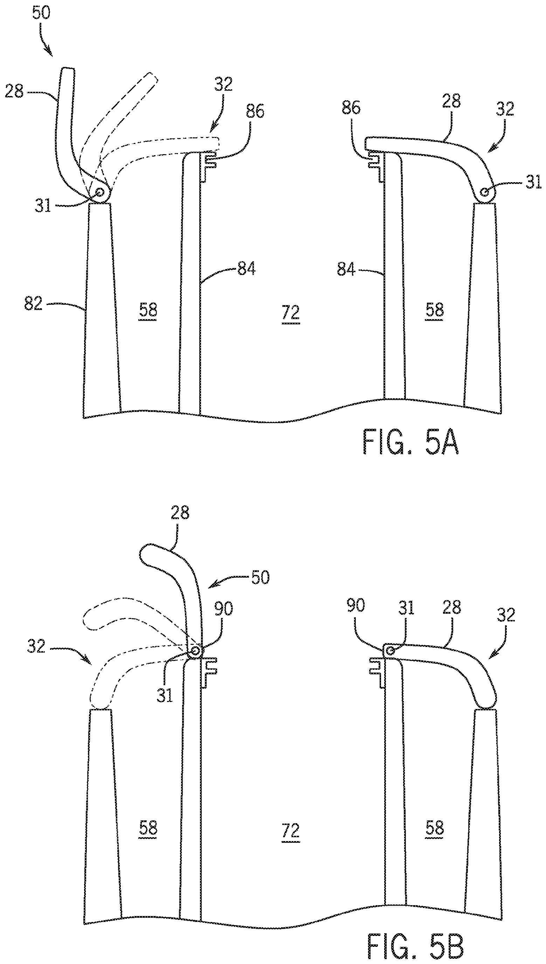

FIG. 5A is a schematic front cross-sectional view according to an exemplary embodiment of the armrest assembly AR. According to an exemplary embodiment, the base 24 includes a wall 82 (e.g., laterally opposed outer walls) and first and second dividers 84 (e.g., laterally opposed inner walls). The first and second dividers 84 are configured to form the main compartment 72 and the respective first and second side compartments 58. According to an exemplary embodiment, the main compartment 72 is located adjacent to at least one of the first and second side compartments 58. According to an exemplary embodiment, the main compartment 72 is located between (e.g., along a lateral axis of the base 24) the first and second side compartments 58. The first side compartment 58 and the second side compartment 58 are disposed between the wall 82 and a respective divider 84. According to an exemplary embodiment, the main compartment 72 is disposed between the first and second dividers 84. According to an exemplary embodiment, each of the dividers 84 supports a track 86. The track 86 may be coupled (e.g., fixed via a fastener) to each of the first and second dividers 84 or may be molded as part of the dividers 84. In an exemplary embodiment, the cover 36 may include protrusions (e.g., protruding laterally outward from the cover 36) configured to engage the track 86. The track 86 may be configured to support the cover 36 and to facilitate movement of the cover 36 relative to the base 24. According to an exemplary embodiment, one track 86 may be coupled to the wall 82 and the other track 86 may be coupled to a divider 84 and the cover 36 may be configured to slide along the wall 82 and the divider 82 via the tracks 86.

According to an exemplary embodiment shown in FIG. 5A, the first and second doors 28 are coupled to the wall 82 by the hinges 31. According to an exemplary embodiment, the first door 28 is in the open position 50, and the second door 28 is in the closed position 32. When the first door 28 is in the open position 50, the first side compartment 58 is substantially uncovered and accessible to the vehicle occupant. The first door 28 is shown in an approximately vertical position, but the first and second doors 28 may rotate about the respective hinges 31 through any suitable angle to enable access to the respective side compartments while also avoiding or limiting interference with the vehicle occupants, vehicle restraints, or the like, according to exemplary embodiments. In FIG. 5A, a set of phantom lines show the first door 28 in an intermediate position during movement of the first door 28 between the open position 50 and the closed position 32 and in the closed position 32 in which the first door 28 substantially covers the first side compartment 58. According to an exemplary embodiment, rotation of the first armrest portion 28 in a first direction opens the first armrest portion 28, while rotation of the first armrest portion 28 in a second, substantially opposite direction closes the first armrest portion 28. The second armrest portion 28 enables access to a second side compartment 58, and the cover 36 enables access to the main compartment 72. As noted above, while three storage compartments 58, 58, 72 are shown, any suitable number of storage compartments may be provided and the storage compartments may have any suitable configuration according to exemplary embodiments.

FIG. 5B is a schematic front cross-sectional view according to an exemplary embodiment of the armrest assembly AR in which the first and second doors 28 are pivotally coupled to the first and second dividers 84 of the base 24 via respective hinges 31 positioned at laterally interior edges 90 of the first and second doors 28. According to an exemplary embodiment, the first door 28 moves from the closed position 32 shown by phantom lines to an intermediate position and then to the open position 50 via rotation about the hinge 31 in the first direction. The first door 28 moves from the open position 50 to the closed position 32 via rotation in the second direction. The second door 28 may move between open and closed positions in a similar manner. Although the first door 28 is shown in an approximately vertical position, the first and second doors 28 may rotate about the respective hinges 31 through any suitable angle to enable access to the respective storage compartments while also avoiding or limiting interference with the vehicle occupants, vehicle restraints, or the like, according to exemplary embodiments.

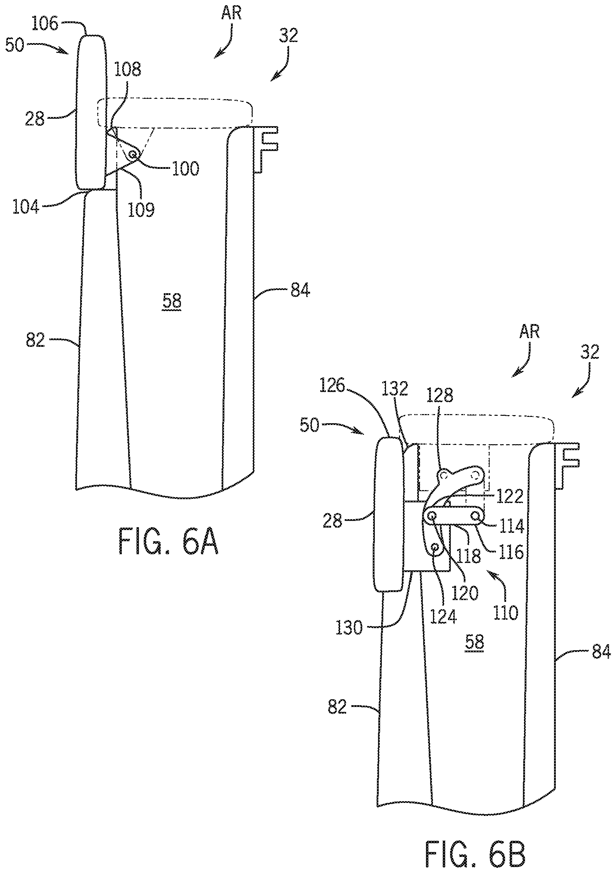

FIG. 6A is a schematic front cross-sectional view of a portion of the armrest assembly AR according to an exemplary embodiment in which the first door 28 is pivotally coupled to the base 24 via an offset pivot 100. Although only the first door 28 is illustrated, the other movable armrest portions may also be coupled to the base 24 via respective offset pivots 100 and may move between open and closed positions in a similar manner according to exemplary embodiments. According to an exemplary embodiment, FIG. 6A shows that the first door 28 moves from the closed position 32 shown by phantom lines to the open position 50 via rotation about the offset pivot 100 in a first direction. According to an exemplary embodiment, while the first door 28 is in the open position 50, the first door 28 extends generally vertically (e.g., along a vertical axis of the base 24) and may be generally parallel to the wall 82 of the base 24. According to an exemplary embodiment, the first door 28 may be supported within a recess 104 formed in the wall 82 of the 24 when in the open position 50. In the open position 50, according to an exemplary embodiment, an interior lateral edge 106 of the first door 28 may be flush with a vertical edge 108 of the wall 82 such that the first door 28 does not extend vertically (e.g., along a vertical axis of the base 24) beyond the vertical edge 108 of the wall 82. According to an exemplary embodiment, less than 75, 50, 25, or 10 percent of the first door 28 extends vertically beyond the vertical edge 108 of the outer wall 82, while the first door 28 is in the open position 50. Such a configuration may enable access to the first side compartment 58, while also avoiding or limiting interference with the vehicle occupants, vehicle restraints, or the like. According to an exemplary embodiment, when the first door 28 is in the open position 50, the offset pivot 100 is laterally offset (e.g., along a lateral axis of the support structure 24) from the first armrest portion 28.

According to an exemplary embodiment, the first door 28 moves from the open position 50 to the closed position 32 via rotation about the offset pivot 100 in a second direction, which is substantially opposite from the first direction. According to an exemplary embodiment, while the first door 28 is in the closed position 32, the offset pivot 100 is vertically offset (e.g., along a vertical axis of the base 24) from the first door 28. The offset pivot 100 may be coupled to any suitable portion of the first door 28 via any suitable components, such as a flange 109 (e.g., connector). The offset pivot 100 may be coupled to the base 24 via any suitable components (e.g., connectors). To facilitate access to the first side compartment 58, one or more offset pivots 100 and corresponding flanges 108 may be positioned proximate to the forward end 37 and/or the rear end 39 of the armrest assembly AR according to an exemplary embodiment.

FIG. 6B is a schematic front cross-sectional view of a portion of the armrest assembly AR according to an exemplary embodiment in which the first door 28 is pivotally coupled to the base 24 via a multiple pivot assembly 110. Although only the first door 28 is illustrated, other movable doors may also be coupled to the base 24 via a respective multiple pivot assembly 110 and may move between open and closed positions in a similar manner. According to an exemplary embodiment, the first door 28 moves from the closed position 32 (shown by phantom lines) to the open position 50 via the assembly 110. Phantom lines also illustrate the various components of the assembly 110 while the first armrest portion 28 is in the closed position 32. According to an exemplary embodiment, the assembly 110 includes a fixed pivot 114 (e.g., a central pivot) coupled to a first end 116 of a linkage member 118 (e.g., arm) and a first movable pivot 120 coupled to a second end 122 of the linkage member 118. The first movable pivot 120 and a second movable pivot 124 are supported within a guide member 126 (e.g., track). When the first door 28 is in the closed position 32, rotation of the first door 28 causes the first door 28 to initially rotate about the second movable pivot 124 and causes the second movable pivot 124 to move out of (e.g., disengage from) a recess 128 of the guide member 126. Once the second movable pivot 124 disengages from the recess 128, the first door 28 rotates about the fixed pivot 114, and the first and second movable pivots 120, 124 move (e.g., slide) within the guide member 126. According to an exemplary embodiment, such a configuration enables the first door 28 to pivotally open and slide along the wall 82 of the base 24, while avoiding or limiting interference with objects stored within the storage compartment 58, the vehicle occupants, vehicle restraints, or the like.

According to an exemplary embodiment, while the first door 28 is in the open position 50, the first door 28 extends generally vertically (e.g., along a vertical axis of the support structure 24) and may be generally parallel to the wall 82 of the base 24. According to an exemplary embodiment, the first door 28 may be supported within a recess 120 formed in the wall 82 of the base 24 when in the open position 50. In the open position 50, according to an exemplary embodiment, an interior lateral edge 126 of the first door 28 may be flush with a vertical edge 132 of the wall 82 such that the first door 28 does not extend vertically (e.g., along a vertical axis of the base 24) beyond the vertical edge 132 of the wall 82. According to an exemplary embodiment, less than 75, 50, 25, or 10 percent of the first door 28 extends vertically beyond the vertical edge 132 of the wall 82 while the first door 28 is in the open position 50. Such a configuration may enable access to the first side compartment 58, while also avoiding or limiting interference with the vehicle occupants, vehicle restraints, or the like. According to a exemplary embodiment, when the first door 28 is in the open position 50, the fixed pivot 114 is laterally offset (e.g., along a lateral axis of the base 24) from the first door 28.

According to an exemplary embodiment, the first door 28 moves from the open position 50 to the closed position 32 via rotation about the fixed pivot 114 of the assembly 110. According to an exemplary embodiment, while the first door 28 is in the closed position 32, the fixed pivot 114 is vertically offset (e.g., along a vertical axis of the base 24) from the first door 28. The assembly 110 may be coupled to any suitable portion of the first door 28 via any suitable components, such as a flange 130 (e.g., connector). The linkage assembly 110 may be coupled to the base 24 via any suitable components (e.g., connectors). To facilitate access to the first side compartment 58, one or more assemblies 110 and corresponding flanges 130 may be positioned proximate to the forward end 37 and/or the rear end 39 of the armrest assembly 18.

According to an exemplary embodiment, a vehicle armrest system comprises a support structure; an armrest assembly comprising a first armrest portion adjacent to an opening of the armrest assembly and pivotally coupled to the support structure, wherein the first armrest portion is configured to rotate between a closed position that substantially covers a first storage compartment within the support structure and an open position that facilitates access to an interior of the first storage compartment; and a tambour door positioned within the opening in the armrest assembly and slidable with respect to the first armrest portion between a closed position that substantially covers a second storage compartment within the support structure and an open position that facilitates access to an interior of the second storage compartment.

According to an exemplary embodiment of the vehicle armrest system, the first armrest portion is pivotally coupled to the support structure via a hinge disposed proximate to a laterally outer edge of the first armrest portion. According to an exemplary embodiment of the vehicle armrest system, the first armrest portion is pivotally coupled to the support structure via a hinge disposed proximate to a laterally inner edge of the first armrest portion. According to an exemplary embodiment of the vehicle armrest system, the first armrest portion is pivotally coupled to the support structure via a hinge disposed proximate to a rear edge of the first armrest portion. According to an exemplary embodiment of the vehicle armrest system, the first armrest portion is pivotally coupled to the support structure via an offset pivot. According to an exemplary embodiment of the vehicle armrest system, the first armrest portion is pivotally coupled to the support structure via a multiple pivot assembly comprising a fixed pivot and one or more movable pivots. According to an exemplary embodiment of the vehicle armrest system, the armrest assembly comprises a second armrest portion adjacent to the opening of the armrest assembly and pivotally coupled to the support structure, and the second armrest portion is configured to rotate between a closed position that substantially covers a third storage compartment within the support structure and an open position that facilitates access to an interior of the third storage compartment. According to an exemplary embodiment of the vehicle armrest system, the first armrest portion and the second armrest portion are disposed on opposite lateral sides of the opening within which the tambour door is positioned. According to an exemplary embodiment of the vehicle armrest system, the armrest assembly comprises a third armrest portion adjacent to the opening and pivotally coupled to the support structure, and the third armrest portion is configured to rotate between a closed position that substantially covers a fourth storage compartment within the support structure and an open position that facilitates access to an interior of the fourth storage compartment. According to an exemplary embodiment of the vehicle armrest system, the second storage compartment is disposed between the first and the third storage compartments along a lateral axis of the support structure. According to an exemplary embodiment of the vehicle armrest system, the second storage compartment is defined between generally opposed inner walls of the support structure, tracks are supported by the generally opposed inner walls of the support structure, and the tambour door comprises protrusions that engage the tracks to facilitate movement of the tambour door along the tracks.

According to an exemplary embodiment, a vehicle armrest system comprises a support structure comprising a plurality of storage compartments; an armrest assembly comprising a first armrest portion and a second armrest portion disposed on laterally opposite sides of an opening of the armrest assembly, wherein each of the first armrest portion and the second armrest portion is independently pivotally coupled to the support structure; and a tambour door positioned within the opening in the armrest assembly and slidable with respect to the support structure between a closed position that substantially covers a first storage compartment of the plurality of storage compartments and an open position that facilitates access to an interior of the first storage compartment of the plurality of storage compartments. According to an exemplary embodiment of the vehicle armrest system, the first armrest portion is configured to move between a closed position that substantially covers a second storage compartment of the plurality of storage compartments and an open position that facilitates access to an interior of the second storage compartment of the plurality of storage compartments, and the second armrest portion is configured to move between a closed position that substantially covers a third storage compartment of the plurality of storage compartments and an open position that facilitates access to an interior of the third storage compartment of the plurality of storage compartments. According to an exemplary embodiment of the vehicle armrest system, the first armrest portion is configured to independently pivot relative to the support structure via respective offset pivots. According to an exemplary embodiment of the vehicle armrest system, the first armrest portion is configured to independently pivot relative to the support structure via a hinge disposed at a laterally outer edge of the first armrest portion. According to an exemplary embodiment of the vehicle armrest system, the support structure comprises opposed laterally interior walls configured to separate at least some of the plurality of storage compartments from one another, and tracks configured to support the tambour door are coupled to the laterally interior walls.

According to an exemplary embodiment, a vehicle armrest system comprises a support structure comprising a central storage compartment disposed between laterally outer storage compartments; an armrest assembly coupled to the support structure, wherein the armrest assembly comprises a first armrest portion configured to enable access to one of the laterally outer storage compartments and a second armrest portion configured to enable access to another one of the laterally outer storage compartments; and a tambour door positioned within an opening in the armrest assembly and configured to move relative to the support structure to enable access to the central storage compartment. According to an exemplary embodiment of the vehicle armrest system, the first armrest portion and the second armrest portion are independently pivotally coupled to the support structure and are configured to independently rotate relative to the support structure to enable access to the respective one of the laterally outer storage compartments. According to an exemplary embodiment of the vehicle armrest system, the first armrest portion and the second armrest portion are independently pivotally coupled to the support structure via respective offset pivots to enable access to the respective one of the laterally outer storage compartments. According to an exemplary embodiment of the vehicle armrest system, the support structure comprises laterally opposed interior walls that separate the central storage compartment from the laterally outer storage compartments, and the tambour door is slidingly supported by tracks extending along each of the laterally opposed interior walls.

While certain mechanisms (e.g., hinges, offset pivots, linkage assemblies) to facilitate moving the movable doors or armrest portions between open and closed positions are disclosed, the disclosed exemplary embodiments may include any suitable mechanism configured to independently move the movable doors or armrest portions between the closed position 32 in which the corresponding compartment is substantially covered and the open position 50 in which the corresponding storage compartment is substantially uncovered. The various features of the exemplary embodiments disclosed herein may be combined in any suitable manner.

While only certain features and exemplary embodiments of the invention have been illustrated and described, many modifications and changes may occur to those skilled in the art (e.g., variations in sizes, dimensions, structures, shapes and proportions of the various elements, values of parameters (e.g., temperatures, pressures, etc.), mounting arrangements, use of materials, colors, orientations, etc.) without materially departing from the novel teachings and advantages of the subject matter recited in the claims. The order or sequence of any process or method steps may be varied or re-sequenced according to alternative exemplary embodiments. In an effort to provide a concise description of the exemplary embodiments, all features of an actual implementation may not have been described (i.e., those unrelated to the presently contemplated best mode of carrying out the invention, or those unrelated to enabling the claimed invention). It should be appreciated that in the development of any such actual implementation, as in any engineering or design project, numerous implementation specific decisions may be made. Such a development effort might be complex and time consuming, but would nevertheless be a routine undertaking of design, fabrication, and manufacture for those of ordinary skill having the benefit of this disclosure, without undue experimentation.

## Claims

1. A component for a vehicle interior comprising:
- a base (24) comprising (a) a first divider (84) configured to form a main compartment (72) and a first side compartment (58) and (b) a second divider (84) configured to form the main compartment (72) and a second side compartment (58);
- a cover (36) configured to enclose the main compartment (72);
- a first door (28) configured to enclose the first side compartment (58); and
- a second door (28) configured to enclose the second side compartment (58);
**characterized in that** the cover (36) is configured to extend between the first divider (84) and the second divider (84) and move along the first divider (84) and the second divider (84) to uncover the main compartment (72).

2. The component of Claim 1 wherein the cover (36) is configured to move along a path between a closed position that substantially covers the main compartment (72) and an open position that substantially uncovers the main compartment (72); and wherein at least one of the first door (28) and the second door (28) is configured to rotate about an axis substantially parallel to the direction of movement of the cover (36) between (a) a closed position that substantially covers at least one of the first side compartment (58) and the second side compartment (58) and (b) an open position that substantially uncovers the at least one of the first side compartment (58) and the second side compartment (58).

3. The component of Claim 1 or 2 wherein the first divider (84) comprises a first track (86) and the second divider (84) comprises a second track (86); wherein the cover (36) is configured to engage the first track (86) and the second track (86).

4. The component of one of Claims 1 to 3 wherein the first door (28) is configured to move between (a) a closed position to enclose the first side compartment (58) and (b) an open position to uncover the first side compartment (58); wherein the cover (36) is configured to move in order to enclose and uncover the main compartment (72) when the first door (28) is in the closed position and the open position.

5. The component of Claim 4 wherein the base (24) comprises a first wall (82) and a second wall (82) laterally opposed to the first wall (82); wherein the first door (28) is coupled to the first wall (82) by a hinge (31); and wherein the first door (28) is configured to engage the first divider (84) when the first door (28) is in the closed position to substantially close the first side compartment (58).

6. The component of Claim 5 wherein the hinge (31) comprises at least one of (a) an offset pivot, (b) a pivot assembly comprising a fixed pivot and at least one movable pivot.

7. The component of Claim 5 or 6 wherein the first door (28) is configured to (a) pivot relative to the first wall (82) and (b) slide along the first wall (82) as the first door (28) moves from the closed position to the open position.

8. The component of one of Claims 4 to 7 wherein the base (24) comprises a first wall (82) and a second wall (82) laterally opposed to the first wall (82); wherein the first door (28) is coupled to the first divider (84); and wherein the first door (28) is configured to engage the first wall (82) when the first door (28) is in the closed position to substantially close the first side compartment (58).

9. The component of Claim 8 wherein the first door (28) comprises a mechanism configured to secure the first door (28) to the first wall (82).

10. The component of one of Claims 1 to 9 wherein the first door (28) is pivotally coupled to the first divider (84) and the second door (28) is pivotally coupled to the second divider (84).

11. The component of one of Claims 1 to 10 wherein the first door (28) is pivotally coupled to the first divider (84) by a hinge (31) positioned at a laterally interior edge of the first door (28).

12. The component of one of Claims 1 to 11 wherein the base (24) comprises a first wall (82) configured to form the first side compartment (58) and a second wall (82) configured to form the second side compartment (58); wherein the first door (28) is pivotally coupled to the first wall (82) and the second door (28) is pivotally coupled to the second wall (82).

13. The component of one of Claims 1 to 12 wherein the main compartment (72) is located between the first side compartment (58) and the second side compartment (58).

14. The component of one of Claims 1 to 13 wherein the cover (36), the first door (28) and the second door (28) comprise an armrest assembly.

15. The component of one of Claims 1 to 14 wherein the cover (36) comprises a visible top surface, the first door (28) comprises a visible top surface and the second door (28) comprises a visible top surface; wherein the visible top surface of the cover (36) is configured to be substantially aligned with the visible top surface of the first door (28) and the visible top surface of the second door (28).

## Patentansprüche

1. Komponente für einen Fahrzeuginnenraum, die Folgendes aufweist:
- eine Basis (24), die Folgendes aufweist: (a) einen ersten Teiler (84), der dazu ausgebildet ist, ein Hauptfach (72) und ein erstes Seitenfach (58) auszubilden, und (b) einen zweiten Teiler (84), der dazu ausgebildet ist, das Hauptfach (72) und ein zweites Seitenfach (58) auszubilden;
- eine Abdeckung (36), die dazu ausgebildet ist, das Hauptfach (72) zu schließen;
- eine erste Tür (28), die dazu ausgebildet ist, das erste Seitenfach (58) zu schließen; und
- eine zweite Tür (28), die dazu ausgebildet ist, das zweite Seitenfach (58) zu schließen;
wobei die Abdeckung (36) dazu ausgebildet ist, sich zwischen dem ersten Teiler (84) und dem zweiten Teiler (84) zu erstrecken und sich entlang des ersten Teilers (84) und des zweiten Teilers (84) zu bewegen, um das Hauptfach (72) freizulegen.

2. Komponente gemäß Anspruch 1,
wobei die Abdeckung (36) dazu ausgebildet ist, sich entlang eines Pfades zwischen einer geschlossenen Position, die im Wesentlichen das Hauptfach (72) abdeckt und einer offenen Position, die das Hauptfach (72) im Wesentlichen freilegt, zu bewegen; und
wobei mindestens eine der ersten Tür (28) und der zweiten Tür (28) dazu ausgebildet ist, sich um eine Achse im Wesentlichen parallel zu der Bewegungsrichtung der Abdeckung (36) zu drehen, und zwar zwischen (a) einer geschlossenen Position, die im Wesentlichen mindestens eines von dem ersten Seitenfach (58) und dem zweiten Seitenfach (58) bedeckt, und (b) einer offenen Position, die im Wesentlichen das mindestens eine von dem ersten Seitenfach (58) und dem zweiten Seitenfach (58) freizulegen.

3. Komponente gemäß Anspruch 1 oder 2,
wobei der erste Teiler (84) eine erste Schiene (86) und der zweite Teiler (84) eine zweite Schiene (86) aufweist;
wobei die Abdeckung (36) dazu ausgebildet ist, mit der ersten Schiene (86) und der zweiten Schiene (86) in Eingriff zu kommen.

4. Komponente gemäß einem der Ansprüche 1 bis 3,
wobei die erste Tür (28) derart ausgebildet ist, dass sie sich bewegt, und zwar zwischen (a) einer geschlossenen Position, um das erste Seitenfach (58) zu schließen und (b) einer offenen Position, um das erste Seitenfach (58) freizulegen;
wobei die Abdeckung (36) dazu ausgebildet ist, sich zu bewegen, um das Hauptfach (72) zu schließen und freizulegen, wenn die erste Tür (28) sich in der geschlossenen Position und der offenen Position befindet.

5. Komponente gemäß Anspruch 4,
wobei die Basis (24) eine erste Wand (82) und eine zweite Wand (82) aufweist, die der ersten Wand (82) seitlich gegenüberliegt;
wobei die erste Tür (28) mit der ersten Wand (82) mittels eines Scharniers (31) verbunden ist; und
wobei die erste Tür (28) dazu ausgebildet ist, mit dem ersten Teiler (84) in Eingriff zu kommen, wenn die erste Tür (28) sich in der geschlossenen Position befindet, um im Wesentlichen das erste Seitenfach (58) zu schließen.

6. Komponente gemäß Anspruch 5,
wobei das Scharnier (31) mindestens eines von (a) einem versetzten Zapfen, (b) einer Zapfenanordnung aufweist, die einen festen Zapfen und mindestens einen beweglichen Zapfen aufweist.

7. Komponente gemäß Anspruch 5 oder 6,
wobei die erste Tür (28) dazu ausgebildet ist, (a) relativ zu der ersten Wand (82) schwenkbar zu sein und (b) entlang der ersten Wand (82) zu gleiten, wenn sich die erste Tür (28) von der geschlossenen Position in die geöffnete Position bewegt.

8. Komponente gemäß einem der Ansprüche 4 bis 7,
wobei die Basis (24) eine erste Wand (82) und eine zweite Wand (82) aufweist, die der ersten Wand (82) seitlich gegenüberliegt;
wobei die erste Tür (28) mit dem ersten Teiler (84) verbunden ist; und wobei die erste Tür (28) derart ausgebildet ist, dass sie mit der ersten Wand (82) in Eingriff kommt, wenn die erste Tür (28) in der geschlossenen Position ist, um das erste Seitenfach (58) im Wesentlichen zu schließen.

9. Komponente gemäß Anspruch 8,
wobei die erste Tür (28) einen Mechanismus aufweist, der dazu ausgebildet ist, die erste Tür (28) an der ersten Wand (82) zu befestigen.

10. Komponente gemäß einem der Ansprüche 1 bis 9,
wobei die erste Tür (28) schwenkbar mit dem ersten Teiler (84) und die zweite Tür (28) schwenkbar mit dem zweiten Teiler (84) verbunden ist.

11. Komponente gemäß einem der Ansprüche 1 bis 10,
wobei die erste Tür (28) schwenkbar mit dem ersten Teiler (84) verbunden ist, und zwar mittels eines Scharniers (31), das an einer seitlichen Innenkante der ersten Tür (28) angeordnet ist.

12. Komponente gemäß einem der Ansprüche 1 bis 11,
wobei die Basis (24) eine erste Wand (82) aufweist, die dazu ausgebildet ist, das erste Seitenfach (58) auszubilden, und eine zweite Wand (82) aufweist, die dazu ausgebildet ist, das zweite Seitenfach (58) auszubilden; wobei die erste Tür (28) schwenkbar mit der ersten Wand (82) und die zweite Tür (28) schwenkbar mit der zweiten Wand (82) verbunden ist.

13. Komponente gemäß einem der Ansprüche 1 bis 12,
wobei das Hauptfach (72) zwischen dem ersten Seitenfach (58) und dem zweiten Seitenfach (58) angeordnet ist.

14. Komponente gemäß einem der Ansprüche 1 bis 13,
wobei die Abdeckung (36), die erste Tür (28) und die zweite Tür (28) eine Armlehnen-Anordnung aufweisen.

15. Komponente gemäß einem der Ansprüche 1 bis 14,
wobei die Abdeckung (36) eine sichtbare Oberfläche aufweist, die erste Tür (28) eine sichtbare Oberfläche aufweist und die zweite Tür (28) eine sichtbare Oberfläche aufweist;
wobei die sichtbare Oberfläche der Abdeckung (36) dazu ausgebildet ist, im Wesentlichen zu der sichtbaren Oberfläche der ersten Tür (28) und der sichtbaren Oberfläche der zweiten Tür (28) ausgerichtet zu sein.

## Revendications

1. Composant pour un intérieur de véhicule comprenant :
- une base (24) comprenant (a) un premier diviseur (84) configuré pour former un compartiment principal (72) et un premier compartiment latéral (58) et (b) un deuxième diviseur (84) configurés pour former le compartiment principal (72) et un deuxième compartiment latéral (58) ;
- un couvercle (36) configuré pour fermer le compartiment principal (72) ;
- une première porte (28) configurée pour fermer le premier compartiment latéral (58) ; et
- une deuxième porte (28) configurée pour fermer le deuxième compartiment latéral (58) ;
dans lequel le couvercle (36) est configuré pour s'étendre entre le premier diviseur (84) et le deuxième diviseur (84), et pour se déplacer le long du premier diviseur (84) et du deuxième diviseur (84) pour découvrir le compartiment principal (72).

2. Composant selon la revendication 1,
dans lequel le couvercle (36) est configuré pour se déplacer le long d'un chemin entre une position fermée qui couvre sensiblement le compartiment principal (72) et une position ouverte qui découvre sensiblement le compartiment principal (72) ; et dans lequel au moins une porte parmi la première porte (28) et la deuxième porte (28) est configurée pour pivoter autour d'un axe sensiblement parallèle à la direction du mouvement du couvercle (36) entre (a) une position fermée qui couvre sensiblement au moins un compartiment parmi le premier compartiment latéral (58) et le deuxième compartiment latéral (58) et (b) une position ouverte qui découvre sensiblement au moins un compartiment parmi le premier compartiment latéral (58) et le deuxième compartiment latéral (58).

3. Composant selon la revendication 1 ou 2,
dans lequel le premier diviseur (84) comprend une première voie (86) et le deuxième diviseur (84) comprend une deuxième voie (86) ; dans lequel le couvercle (36) est configuré pour engager la première voie (86) et la deuxième voie (86).

4. Composant selon l'une des revendications 1 à 3,
dans lequel la première porte (28) est configurée pour se déplacer entre (a) une position fermée pour fermer le premier compartiment latéral (58) et (b) une position ouverte pour découvrir le premier compartiment latéral (58) ; dans lequel le couvercle (36) est configuré pour se déplacer afin de fermer et de découvrir le compartiment principal (72) quand la première porte (28) est dans la position fermée et dans la position ouverte.

5. Composant selon la revendication 4,
dans lequel la base (24) comprend une première paroi (82) et une deuxième paroi (82) latéralement opposée à la première paroi (82) ; dans lequel la première porte (28) est couplée à la première paroi (82) par une charnière (31) ; et dans lequel la première porte (28) est configurée pour engager le premier diviseur (84) quand la première porte (28) est dans la position fermée pour sensiblement fermer le premier compartiment latéral (58).

6. Composant selon la revendication 5,
dans lequel la charnière (31) comprend au moins un élément parmi (a) un pivot décalé, (b) un assemblage de pivot comprenant un pivot fixe et au moins un pivot mobile.

7. Composant selon la revendication 5 ou 6,
dans lequel la première porte (28) est configurée pour (a) pivoter par rapport à la première paroi (82) et (b) coulisser le long de la première paroi (82) quand la première porte (28) se déplace depuis la position fermée vers la position ouverte.

8. Composant selon l'une des revendications 4 à 7,
dans lequel la base (24) comprend une première paroi (82) et une deuxième paroi (82) latéralement opposée à la première paroi (82) ; dans lequel la première porte (28) est couplée au premier diviseur (84) ; et dans lequel la première porte (28) est configurée pour engager la première paroi (82) quand la première porte (28) est dans la position fermée pour sensiblement fermer le premier compartiment latéral (58).

9. Composant selon la revendication 8,
dans lequel la première porte (28) comprend un mécanisme configuré pour fixer la première porte (28) à la première paroi (82).

10. Composant selon l'une des revendications 1 à 9,
dans lequel la première porte (28) est couplée en rotation au premier diviseur (84) et la deuxième porte (28) est couplée en rotation au deuxième diviseur (84).

11. Composant selon l'une des revendications 1 à 10,
dans lequel la première porte (28) est couplée en rotation au premier diviseur (84) au moyen d'une charnière (31) positionnée au niveau d'un bord latéralement intérieur de la première porte (28).

12. Composant selon l'une des revendications 1 à 11,
dans lequel la base (24) comprend une première paroi (82) configurée pour former le premier compartiment latéral (58) et une deuxième paroi (82) configurée pour former le deuxième compartiment latéral (58) ; dans lequel la première porte (28) est couplée en rotation à la première paroi (82) et la deuxième porte (28) est couplée en rotation à la deuxième paroi (82).

13. Composant selon l'une des revendications 1 à 12,
dans lequel le compartiment principal (72) est situé entre le premier compartiment latéral (58) et le deuxième compartiment latéral (58).

14. Composant selon l'une des revendications 1 à 13,
dans lequel le couvercle (36), la première porte (28) et la deuxième porte (28) comprennent un assemblage d'accoudoir.

15. Composant selon l'une des revendications 1 à 14,
dans lequel le couvercle (36) comprend une surface supérieure visible, la première porte (28) comprend une surface supérieure visible et la deuxième porte (28) comprend une surface supérieure visible ; dans lequel la surface supérieure visible du couvercle (36) est configurée pour être sensiblement alignée avec la surface supérieure visible de la première porte (28) et la surface supérieure visible de la deuxième porte (28).
